# EUROPÄISCHE PATENTANMELDUNG

(11) **EP 4 838 725 A1**
(43) Veröffentlichungstag der Anmeldung: **11.11.2026**
(21) Anmeldenummer: 26176660.4
(22) Anmeldetag: 05.05.2026
(51) Int. Cl.: H02G 3/06, H02G 3/04

(54) **MEHRTEILIGER ROHRKANAL**

(30) Priorität: 08.05.2025 DE 102025117664
(71) Anmelder: InnoDo AG, 8595 Altnau (CH)
(72) Erfinder: Bächle, Dieter, 8597 Landschlacht (CH)
(74) Vertreter: advotec.

(57) **Zusammenfassung**

Die Erfindung betrifft einen mehrteiliger Rohrkanal, insbesondere zur Aufnahme und/oder Ummantelung von Kabeln oder Leitungen, welcher zumindest annährend als hohler Zylinder ausgebildet ist, wobei ein erster Abschnitt des Umfangs des mehrteiligen Rohrkanals (1) durch einen Rohrkörper (2), welcher Befestigungsaufnahmen (4) aufweist, ausgebildet wird, und wobei ein zweiter Abschnitt des Umfangs des mehrteiligen Rohrkanals (1) durch einen Rohrdeckel (3), welcher komplementär zu den Befestigungsaufnahmen (4) ausgebildete Befestigungsmittel (5) aufweist, ausgebildet wird, wobei der Rohrkörper (2) und Rohrdeckel (3) voneinander lösbar ausgebildet sind und wobei die Befestigungsmittel (5) und die Befestigungsaufnahmen (4), zur Verbindung des Rohrkörpers (2) und Rohrdeckels (3), aneinander, insbesondere reversibel, bevorzugt werkzeuglos, anordenbar sind, wobei ein, bevorzugt in axialer Richtung beweglich gelagerter, Stabilisierungskragen (6) umfasst ist, welcher den Rohrkörper (2) und Rohrdeckel (3) wenigstens abschnittsweise umfangseitig umgreift und/oder übergreift.

## Beschreibung

Die vorliegende Erfindung betrifft einen mehrteiligen Rohrkanal, insbesondere zur Aufnahme und/oder Ummantelung von Kabeln oder Leitungen und ein Rohrsystem umfassend wenigstens einen mehrteiligen Rohrkanal.

Aus dem Stand der Technik sind mehrteilige Rohre vielfältig bekannt und finden besonders zur Führung von Kabeln und Ummantelung von Leitungen zum Schutz vor schädlichen Einflüssen Anwendung. Die Mehrteiligkeit bringt hierbei den Vorteil, dass zunächst der Teil des Rohres welcher die einzubringenden Kabel oder Leitungen aufnimmt verlegt und gegebenenfalls befestigt werden kann und somit bereits in seiner endgültigen Position ist, wenn die Kabel eingeführt werden. Darauf folgend muss das Rohr also nur noch mit seinem zweiten Teil verschlossen werden, um die innenliegenden Kabel oder Leitungen zu schützen.

Nachteilig am Stand der Technik ist, dass die Verbindung der Rohrteile oft zeitaufwändig ist und zum Beispiel eine Verschraubung der Rohrteile aneinander erfordert. Auf der anderen Seite bieten Verbindungsansätze ohne Verschraubungen, oft nur wenig Stabilität und sind anfällig sich eigenständig zu lösen und somit die innenliegenden Kabel oder Leitungen freizulegen, wodurch es zu Beschädigungen und Verschmutzungen kommen kann.

Aus der US 3 711 633 ist ein Rohrkanal bekannt, welcher durch umfangseitige Klemmen zusammengehalten wird. Die DE 10 2022 108 544 A1 beschreibt einen Rohrkanal aus Halbschalen, welche mit Rastlaschen aneinander befestigt werden.

Vor diesem Hintergrund liegt die Aufgabe der vorliegenden Erfindung darin, die Nachteile im Stand der Technik zu überwinden und eine schnelle und dennoch über lange Zeit stabile Verbindungsmöglichkeit für einen mehrteiligen Rohrkanal zu ermöglichen.

Diese Aufgabe wird mit einem mehrteiligen Rohrkanal mit den Merkmalen des Anspruchs 1 gelöst. Des Weiteren wird die Aufgabe mit einem Rohrsystem mit den Merkmalen des Anspruchs 9 gelöst.

Vorteilhafte Ausführungsformen des erfindungsgemäßen mehrteiligen Rohrkanals sind Gegenstand der nachfolgenden Beschreibung und Figurenbeschreibung, sowie der Unteransprüche.

Die vorrichtungsmäßig beschriebenen und beanspruchten Merkmale sollen auch als entsprechend verfahrensmäßig offenbart und beanspruchbar gelten und umgekehrt.

Der mehrteilige Rohrkanal sieht, wie oben bereits erwähnt, insbesondere eine Anwendung zur Aufnahme und/oder Ummantelung von Kabeln oder Leitungen vor, wobei der mehrteilige Rohrkanal zumindest annährend als hohler Zylinder, insbesondere als hohler Zylinder, ausgebildet ist, wobei ein erster Abschnitt des Umfangs des mehrteiligen Rohrkanals durch einen Rohrkörper, welcher Befestigungsaufnahmen aufweist, ausgebildet wird, und wobei ein zweiter Abschnitt des Umfangs des mehrteiligen Rohrkanals durch einen Rohrdeckel, welcher komplementär zu den Befestigungsaufnahmen ausgebildete Befestigungsmittel aufweist, ausgebildet wird, wobei der Rohrkörper und Rohrdeckel voneinander lösbar ausgebildet sind und wobei die Befestigungsmittel und die Befestigungsaufnahmen, zur Verbindung des Rohrkörpers und Rohrdeckels, aneinander, insbesondere reversibel, bevorzugt werkzeuglos, anordenbar sind.

Dabei ist erfindungsgemäß vorgesehen, dass ein, bevorzugt in axialer Richtung beweglich gelagerter, Stabilisierungskragen umfasst ist, welcher den Rohrkörper und Rohrdeckel wenigstens abschnittsweise umfangseitig umgreift und/oder übergreift.

Die Erfindung hat in überraschender Weise erkannt, dass durch die Anordnung des Stabilisierungskragens über den, durch die Befestigungsmittel und Befestigungsaufnahmen ausgebildeten Verbindungen, diese Verbindungen vor einem ungewünschten Lösen sicher geschützt werden können. Durch das Anordnen des Stabilisierungskragens am mehrteiligen Rohrkanal, wird dabei der Arbeitsaufwand nur unmaßgeblich erhöht, insbesondere, weil der Stabilisierungskragen in einer vorteilhaften Ausführungsform werkzeuglos angeordnet werden kann. Um die Stabilität der Verbindung noch weiter zu erhöhen kann hierbei vorteilhaft auch vorgesehen sein, dass mehrere Stabilisierungskragen an einem mehrteiligen Rohrkanal angeordnet werden. Vorteilhaft wird der Rohrkanal aus Kunststoff, zum Beispiel Acrylnitril-Butadien-Styrol und/oder Acrylnitril-Styrol-Acrylester, jeweils mit einem Additiv zur Erhöhung des Schutzes gegen UV-Strahlung und des Brandschutzes, und/oder aus eloxiertem Aluminium hergestellt. Hierbei können der Rohrdeckel und/oder Rohrkörper und/oder Stabilisierungskragen aus demselben oder unterschiedlichem Material oder Materialien ausgebildet sein.

Der Rohrkanal im montierten Zustand ist zumindest annährend als hohler Zylinder ausgebildet. In anderen Worten ausgedrückt ist der Rohrkanal im montierten Zustand als hohler Zylinder ausgebildet, wobei die Mantelfläche des Zylinders mit einem ebenen runden, insbesondere kreisrunden oder elliptischen, Innenumfang und/oder Außenumfang ausgebildet ist oder Erhebungen und/oder Ausnehmungen und/oder Strukturierungen entlang des Innenumfangs und/oder Außenumfangs aufweist, durch welche der Innenumfang und/oder Außenumfang abschnittsweise von einer runden Form abweicht.

Besonders vorteilhaft werden die Befestigungsmittel und die Befestigungsaufnahme, durch ein senkrechtes Aufdrücken des Rohrdeckels auf den Rohrkörper, insbesondere bis die Befestigungsmittel in die Befestigungsaufnahmen einschnappen, miteinander verbunden. Alternativ kann auch vorgesehen sein, dass der Rohrdeckel entlang der axialen Richtung des mehrteiligen Rohrkanals auf den Rohrkörper geschoben wird, wobei die Befestigungsmittel bei Beginn des Einschiebens an den Befestigungsaufnahmen angeordnet werden und durch Schieben des Rohrdeckels oder Rohrkörpers entlang der axialen Richtung, fortschreitend entlang der axialen Richtung verbunden werden.

Gemäß einer ersten vorteilhaften Ausführungsform kann vorgesehen sein, dass der Stabilisierungskragen als umfangseitig unterbrochener Ring ausgebildet ist, welcher bevorzugt an seinen umfangsseitigen Enden Eingriffsabschnitte aufweist. Durch diese Ausführungsform kann der Stabilisierungskragen besonders einfach und intuitiv am mehrteiligen Rohrkanal befestigt werden, wobei der Stabilisierungskragen bevorzugt materialtechnisch derart ausgebildet ist, dass er senkrecht auf den mehrteiligen Rohrkanal aufgesteckt werden kann, wobei die umfangsseitigen Enden hierbei temporär flexibel verformt werden, insbesondere vom axialen Mittelpunkt weggedrückt werden, und anschließend in ihren Ursprungszustand zurückkehren. Vorteilhaft sind an den umfangsseitigen Enden Eingriffsabschnitte ausgebildet, z.B. als vom axialen Mittelpunkt des Stabilisierungskragens wegführende Umschläge bzw. Knicke, welche ein einfaches Lösen des Stabilisierungskragens vom mehrteiligen Rohrkanal, insbesondere werkzeuglos, erlauben.

Vorteilhaft weist der Rohrdeckel an seinen umfangsseitigen Enden Eingriffsabschnitte auf, welche bevorzugt als vom axialen Mittelpunkt des Stabilisierungskragens wegführende Umschläge bzw. Knicke ausgebildet sind. Hierdurch lässt sich der Rohrdeckel besonders einfach vom Rohrkörper lösen.

Gemäß einer weiteren vorteilhaften Ausführungsform kann vorgesehen sein, dass der Rohrkörper und/oder Rohrdeckel vorgespannt sind und/oder miteinander verspannbar sind. Insbesondere wird die Vorspannung erreicht, indem der Rohrkörper vom axialen Mittelpunkt wegführend gebogen ist und/oder der Rohrdeckel zum axialen Mittelpunkt hinführend gebogen ist. Wenn der Rohrdeckel und Rohrkörper miteinander verbunden werden, werden sie entgegen der, insbesondere jeweiligen, Vorspannung elastisch verformt, derart, dass die insgesamt wenigstens annähernd zylindrische Form des Rohrkanals ausgebildet wird. Durch die, insbesondere jeweilige, Rückstellkraft drücken der Rohrdeckel und der Rohrkörper aneinander und werden gegeneinander verspannt.

Weiter vorteilhaft wird die Verspannung zusätzlich oder alternativ dadurch erreicht, dass der Rohrkörper und Rohrdeckel derart dimensioniert sind, dass der Rohrkörper durch das Verbinden der Befestigungsmittel und Befestigungsaufnahmen wenigstens leicht verformt, bevorzugt komprimiert, und/oder in Richtung des axialen Mittelpunkts gedrückt wird, sodass von den Befestigungsaufnahmen, insbesondere entlang in einer radial nach außenführenden Richtung, eine Ausbreitungsspannung auf die Befestigungsmittel wirkt. Vorteilhaft kann hierzu der Rohkörper im Bereich der Befestigungsaufnahmen im weitesten Sinne geweitet und/oder vom Rohrinneren weggebogen verformt sein. Zusätzlich oder alternativ kann der Rohrdeckel in Richtung des axialen Mittelpunkts hingebogen, oder mit kleinerem Umfangsmaß als der Rohrkörper ausgebildet sein. Somit wird die Anordnung der Befestigungsmittel an den Befestigungsaufnahmen druckbeaufschlagt, wodurch ein unerwünschtes Lösen verhindert wird. Die Befestigung des Rohrdeckels und Rohrkörpers wird hierbei insbesondere über ein Einschnappen und/oder Einklicken und/oder Einstecken ermöglicht. Durch den vorgespannten Rohrdeckel und/oder Rohrkörper wird die annährend oder vollständig zylindrische Form des mehrteiligen Rohrkanals erst nach der Verbindung des Rohrdeckels und Rohrkörpers hergestellt.

Gemäß einer weiteren vorteilhaften Ausführungsform kann vorgesehen sein, dass die Befestigungsmittel und Befestigungsaufnahmen als komplementäre Hakenabschnitte ausgebildet sind. Die Ausbildung erlaubt eine besonders einfache Anordnung aneinander und kann besonders intuitiv hergestellt werden. Vorteilhaft sind die Befestigungsaufnahmen dabei als innenliegende Haken ausgebildet, und die Befestigungsmittel als außenliegende, die Befestigungsaufnahmen übergreifende und in sie eingreifende, Haken ausgebildet. Alternativ können die Befestigungsmittel und Befestigungsaufnahme als Steckverbindung ausgebildet sein, wobei die Befestigungsmittel in die Befestigungsaufnahme steckbar ausgebildet sind und wobei bevorzugt am Rohrdeckel durch die Ausbildung eines Versatzes entlang des Umfangs benachbart zu den Befestigungsmitteln eine Ausnehmung derart ausgebildet wird, dass der endseitige Abschnitt des Rohrkörpers, welcher benachbart zu den Befestigungsaufnahmen angeordnet ist, in diese Ausnehmung einsteckbar bzw. schiebbar ist.

Gemäß einer weiteren vorteilhaften Ausführungsform kann vorgesehen sein, dass der Stabilisierungskragen zwei, insbesondere spiegelsymmetrisch ausgebildete, Bogenabschnitte aufweist. Besonders vorteilhaft sind die Bogenabschnitte derart ausgebildet, dass sie die verbundenen Befestigungsmittel und Befestigungsaufnahmen übergreifen und dabei bevorzugt wenigstens abschnittsweise formschlüssig an den Verbindungen anliegen. Hierdurch wird eine besonders gute Stabilisierung des Verbunds von Rohrkörper und Rohrdeckel erreicht und ein unerwünschtes Lösen verhindert.

Gemäß einer weiteren vorteilhaften Ausführungsform kann vorgesehen sein, dass der Umfang des mehrteiligen Rohrkanals zu 60 bis 90%, bevorzugt 60 bis 80%, ganz besonders bevorzugt 60 bis 70%, durch den Rohrkörper ausgebildet wird. Diese Ausführung hat sich als besonders vorteilhaft herausgestellt, um eine Stabilität des mehrteiligen Rohrkanals zu gewährleisten und ebenso eine einfache Handhabung des Rohrkörpers und Rohrdeckels zu ermöglichen.

Gemäß einer weiteren vorteilhaften Ausführungsform kann vorgesehen sein, dass der Stabilisierungskragen 50 bis 90%, bevorzugt 60 bis 80%, des Umfangs des mehrteiligen Rohrkanals umschließt. Mit diesen Maßen kann der Stabilisierungskragen einerseits besonders stabil ausgeführt und andererseits gewährleistet werden, dass der Stabilisierungskragen, insbesondere bei seiner Ausführung als unterbrochener Ring, einfach und ohne maßgeblichen Kraftaufwand an den mehrteiligen Rohrkanal angeordnet werden kann. Somit wird auch das Material des Stabilisierungskragens bei der Anordnung nur wenig beansprucht, wodurch der Stabilisierungskragen auch nach mehrfachem Herstellen und Lösen der Anordnung am mehrteiligen Rohrkanal stabil bleibt.

Gemäß einer weiteren vorteilhaften Ausführungsform kann vorgesehen sein, dass am Rohrkörper verlaufende Stege ausgebildet sind, welche insbesondere eine Standebene aufspannen. Besonders vorteilhaft verlaufen die Stege entlang der axialen Richtung des mehrteiligen Rohrkanals und sind dabei senkrecht zum axialen Mittelpunkt des mehrteiligen Rohrkanals, erhaben auf dem Umfang aufsitzend ausgebildet. Weiter vorteilhaft verlaufen genau zwei Stege am Rohrkörper, wobei der Rohrkörper bevorzugt zwischen den Stegen eine Abflachung aufweist, wodurch durch die Stege und den Rohrkörper eine Standebene aufgespannt und/oder ein Kleber-Kanal ausgebildet wird, an welcher der Rohrkörper zum Beispiel an einem Untergrund angeordnet, insbesondere verschraubt und/oder verklebt, werden kann. Alternativ zu axial verlaufenden Stegen ist ebenso denkbar, dass eine Vielzahl von Stegen tangential am Umfang des Rohrkörpers, insbesondere parallel zueinander angeordnet, verläuft.

Gemäß einer weiteren vorteilhaften Ausführungsform kann vorgesehen sein, dass an der in Bezug auf den axialen Mittelpunkt innenliegenden Seite des Rohrkörpers eine entlang der Längsrichtung verlaufende, insbesondere rinnenförmige, Einkerbung ausgebildet ist. Hierdurch wird besonders vorteilhaft ermöglicht eine bessere Biege-Elastizität zu erreichen, welche das Befestigen des Rohrdeckels mit Vorspannung erleichtert. Des Weiteren wird durch die Einkerbung ein Schraubkanal, insbesondere für eine Linsenkopfsenkschraube, und/oder eine Bohrlinie ausgebildet. Die Einkerbung kann hierbei vorteilhaft unterschiedlich stark und/oder tief ausgeprägt sein und/oder unterschiedliche Formen aufweisen, zum Beispiel V-förmig oder U-förmig und/oder gestuft, um eine entsprechend ausgeprägte Biege-Elastizität zu erreichen. Die Einkerbung kann des Weiteren als Materialdünnstelle und/oder Ausnehmung in der Wand des Rohrkörpers ausgebildet sein, wobei insbesondere der Umfang des Rohrkörpers durch die Einkerbung nicht vergrößert wird, oder als Ausformung des Rohrkörpers, welche in Bezug auf den axialen Mittelpunkt des Rohrkörpers den Umfang des Rohrkörpers im Bereich der Einkerbung erweitert.

Die oben genannte Aufgabe wird des Weiteren gelöst durch ein Rohrsystem, insbesondere zur Aufnahme und/oder Ummantelung von Kabeln oder Leitungen, umfassend einen oder eine Vielzahl von mehrteiligen Rohrkanälen welche zumindest annährend als hohle Zylinder ausgebildet sind, wobei ein erster Abschnitt des Umfangs eines mehrteiligen Rohrkanals durch einen Rohrkörper, welcher Befestigungsaufnahmen aufweist, ausgebildet wird, und wobei ein zweiter Abschnitt des Umfangs eines mehrteiligen Rohrkanals durch einen Rohrdeckel, welcher komplementär zu den Befestigungsaufnahmen ausgebildete Befestigungsmittel aufweist, ausgebildet wird, wobei die Rohrkörper und Rohrdeckel voneinander lösbar ausgebildet sind und wobei die Befestigungsmittel und die Befestigungsaufnahmen, zur Verbindung der Rohrkörper und Rohrdeckel, aneinander, insbesondere reversibel, bevorzugt werkzeuglos, anordenbar sind.

Erfindungsgemäß ist vorgesehen, dass ein oder eine Vielzahl von, bevorzugt in axialer Richtung beweglich gelagerter, Stabilisierungskragen umfasst ist, welche die Rohrkörper und Rohrdeckel wenigstens abschnittsweise umfangseitig umgreifen und/oder übergreifen.

Zur Vermeidung unnötiger Wiederholung wird im Hinblick auf die vorteilhaften Wirkungen sowie die vorteilhaften Ausführungen des Rohrsystems auf den oben beschriebenen mehrteiligen Rohrkanal verwiesen.

Zusammengefasst ermöglicht das erfindungsgemäße Rohrsystem eine schnelle und dennoch über lange Zeit stabile Verbindungsmöglichkeit, für einen mehrteiligen Rohrkanal in einem Rohrsystem.

Gemäß einer ersten vorteilhaften Ausführungsform des Rohrsystems kann vorgesehen sein, dass wenigstens ein zweiter mehrteiliger Rohrkanal umfasst ist, wobei der Stabilisierungskragen die Verbindungsstelle des ersten und zweiten mehrteiligen Rohrkanals umgreifend und/oder umfassend angeordnet ist. Hierdurch wird zusätzlich zu der Stabilisierung der Verbindungen der Rohrkörper und Rohrdeckel erreicht, dass auch die Verbindung bzw. Anordnung mehrere mehrteilige Rohrkanäle aneinander stabilisiert wird und die Stöße der Rohrkanäle abgedichtet werden.

Gemäß einer weiteren vorteilhaften Ausführungsform kann vorgesehen sein, dass wenigstens ein, bevorzugt eine Vielzahl von, flexiblen Biegeabschnitten umfasst ist, welche insbesondere als Wellenrohr ausgebildet sind, wobei die Biegeabschnitte, insbesondere an einem Glattrohrabschnitt, bevorzugt über Kontaktmittel, mit dem mehrteiligen Rohrkanal verbindbar sind, wobei besonders bevorzugt der Stabilisierungskragen die Verbindungsstelle des mehrteiligen Rohrkanals und des flexiblen Biegeabschnitts umgreifend und/oder umfassend angeordnet ist. Die vorteilhaften Glattrohrabschnitte sind hierbei bevorzugt monolithisch an den Biegeabschnitten ausgebildet. Vorteilhaft können die Biegeabschnitte an ihren beidseitigen, axialen Enden ein Glattrohrabschnitt aufweisen. Durch die Biegeabschnitte wird hierbei vorteilhaft eine variable Führung über Eck des Rohrsystems ermöglicht, welche flexibel an die vorhandenen Bauraumbedingungen angepasst werden kann.

Gemäß einer weiteren vorteilhaften Ausführungsform kann vorgesehen sein, dass ein, insbesondere steifer, Eckabschnitt umfasst ist, welcher, bevorzugt über Kontaktmittel, mit dem mehrteiligen Rohrkanal und/oder Biegeabschnitt verbindbar ist und einen Bogen von 10 bis 170°, bevorzugt 40 bis 90°, ganz besonders bevorzugt 45° oder 87° oder 90°, ausbildet, wobei besonders bevorzugt der Stabilisierungskragen die Verbindungsstelle des mehrteiligen Rohrkanals und des Eckabschnitts umgreifend und/oder umfassend angeordnet ist. Der Bogen wird hierbei durch den Winkel definiert, in welchem ausgehend von einer beliebigen der beiden Eintrittsöffnungen des Eckabschnitts, die Austrittsachse der gegenüberliegenden Öffnung zu der Eintrittsachse steht. Durch die Eckabschnitte wird ein Führen des Rohrsystems um Ecken ermöglicht, wobei die vorteilhafte Ausführung als steifer Eckabschnitt sich zum Beispiel auch besonders gut dafür eignet, um Übergänge von einer Horizontalen zu einer Vertikalen Führung auszubilden. Der Eckabschnitt kann vorteilhaft einteilig ausgebildet sein, alternativ kann der Eckabschnitt mehrteilig ausgebildet sein, wobei vorteilhaft die Teilstücke vollständig voneinander lösbar sind oder über ein Scharnier beweglich miteinander verbunden sind, insbesondere derart, dass ein oberes Teilstück aufgeklappt werden kann. Weiter vorteilhaft kann wenigstens ein Verschlussmechanismus, zum Beispiel ein händisch lösbarer Rastmechanismus, vorgesehen sein, welcher ein ungewolltes Aufklappen oder Trennen der Teilstücke verhindert. Die zur Verbindung mit dem mehrteiligen Rohrkanal oder anderen Komponenten des Rohrsystems vorgesehenen Enden des Eckabschnitts können derart ausgebildet sein, dass der mehrteilige Rohrkanal in den Eckabschnitt eingeschoben oder auf den Eckabschnitt aufgeschoben werden kann. Der Eckabschnitt kann mit einer abgerundeten oder teilweise geradekantigen Eckstruktur ausgebildet sein und kann weiter vorteilhaft Stege, zum Aufspannen einer Standebene aufweisen. In einem Rohrsystem können vorteilhaft verschiedene Ausführungsformen des Eckabschnitts angeordnet werden, um das Rohrsystem lokal den jeweiligen Einbaubedingungen anzupassen, zum Beispiel kann in einem Rohrsystem ein Eckabschnitt mit einem Bogen von 45°, mit einem Bogen von 87° und mit einem Bogen von 90° angeordnet sein.

Gemäß einer weiteren vorteilhaften Ausführungsform kann vorgesehen sein, dass die Kontaktmittel als umfangsseitiger Haftring, insbesondere als elastisch verformbarer Lippendichtungsring, ausgebildet sind. Hierdurch wird vorteilhaft ein Verbindungssystem ermöglicht, das rein durch ein Einstecken eines Eckabschnitts und/oder Biegeabschnitts in einen mehrteiligen Rohrkanal eine sichere Verbindung ermöglicht. Die Kontaktmittel weisen hierbei bevorzugt eine strukturierte Oberfläche auf, welche einerseits ein einfaches Einführen des Eckabschnitts oder Biegeabschnitts in einen mehrteiligen Rohrkanal erlaubt, und andererseits mit einem bewussten Kraftaufwand auch ein Wiederentfernen bzw. Herausziehen des Eckabschnitts und/oder Biegeabschnitts, aus dem mehrteiligen Rohrkanal ermöglicht.

Gemäß einer weiteren vorteilhaften Ausführungsform kann vorgesehen sein, dass ein T-Stück umfasst ist, welches mit dem mehrteiligen Rohrkanal und/oder Biegeabschnitt verbindbar ist, wobei besonders bevorzugt der Stabilisierungskragen der Verbindungsstelle des mehrteiligen Rohrkanals und des T-Stücks umgreifend und/oder umfassend angeordnet ist. Hierdurch wird die Anpassbarkeit des Rohrsystems an verschiedene Einbausituationen noch weiter verbessert. Das T-Stück kann vorteilhaft einteilig ausgebildet sein, oder alternativ kann das T-Stück mehrteilig ausgebildet sein, wobei vorteilhaft die Teilstücke vollständig voneinander lösbar sind oder über ein Scharnier beweglich miteinander verbunden sind, insbesondere derart, dass ein oberes Teilstück aufgeklappt werden kann. Weiter vorteilhaft kann wenigstens ein Verschlussmechanismus, zum Beispiel ein händisch lösbarer Rastmechanismus, vorgesehen sein, welcher ein ungewolltes Aufklappen oder Trennen der Teilstücke verhindert. Die zur Verbindung mit dem mehrteiligen Rohrkanal oder anderen Komponenten des Rohrsystems vorgesehenen Enden des T-Stücks können derart ausgebildet sein, dass der mehrteilige Rohrkanal in das T-Stück eingeschoben oder auf das T-Stück aufgeschoben werden kann. Weiter vorteilhaft kann das T-Stück Stege aufweisen, welche eine Standebene aufspannen. Es ist möglich, dass verschiedene Ausführungsformen des T-Stücks in einem Rohrsystem angeordnet werden.

Gemäß einer weiteren vorteilhaften Ausführungsform kann vorgesehen sein, dass der Stabilisierungskragen als umfangsseitig unterbrochener Ring ausgebildet ist, welcher bevorzugt an seinen umfangsseitigen Enden Eingriffsabschnitte aufweist. Wie bereits vorhervorgehend erläutert, wird hierdurch erreicht, dass der Stabilisierungskragen besonders einfach und intuitiv am mehrteiligen Rohrkanal angebracht werden kann.

Gemäß einer weiteren vorteilhaften Ausführungsform kann vorgesehen sein, dass der Rohrkörper und/oder Rohrdeckel vorgespannt und/oder miteinander verspannbar sind. Insbesondere wird die Vorspannung erreicht, indem der Rohrkörper vom axialen Mittelpunkt wegführend gebogen ist und/oder der Rohrdeckel zum axialen Mittelpunkt hinführend gebogen ist. Wenn der Rohrdeckel und Rohrkörper miteinander verbunden werden, werden sie entgegen der, insbesondere jeweiligen, Vorspannung elastisch verformt, derart, dass die insgesamt wenigstens annähernd zylindrische Form des Rohrkanals ausgebildet wird. Durch die, insbesondere jeweilige, Rückstellkraft drücken der Rohrdeckel und der Rohrkörper aneinander und werden gegeneinander verspannt. Zusätzlich oder alternativ wird die Verspannung dadurch erreicht, dass der Rohrkörper und Rohrdeckel derart dimensioniert sind, dass der Rohrkörper durch das Verbinden der Befestigungsmittel und Befestigungsaufnahmen wenigstens leicht verformt, bevorzugt komprimiert, wird, sodass von den Befestigungsaufnahmen, insbesondere entlang in einer radial nach außenführenden Richtung, eine Ausbreitungsspannung auf die Befestigungsmittel wirkt. Zusätzlich oder alternativ kann der Rohrdeckel in Richtung des axialen Mittelpunkts eingebogen, oder mit kleinerem Umfangsmaß als der Rohrkörper ausgebildet sein. Hierdurch wird die Verbindung zwischen Befestigungsaufnahmen und Befestigungsmitteln besonders stabil ausgebildet.

Gemäß einer weiteren vorteilhaften Ausführungsform kann vorgesehen sein, dass die Befestigungsmittel und die Befestigungsaufnahmen als komplementäre Hakenabschnitte ausgebildet sind. Vorteilhaft sind die Befestigungsaufnahmen dabei als innenliegende Haken ausgebildet, und die Befestigungsmittel als außenliegende, die Befestigungsaufnahmen übergreifende und in sie eingreifende, Haken ausgebildet. Alternativ können die Befestigungsmittel und Befestigungsaufnahme als Steckverbindung ausgebildet sein, wobei die Befestigungsmittel in die Befestigungsaufnahme steckbar ausgebildet sind und wobei bevorzugt am Rohrdeckel durch die Ausbildung eines Versatzes entlang des Umfangs benachbart zu den Befestigungsmitteln eine Ausnehmung derart ausgebildet wird, dass der endseitige Abschnitt des Rohrkörpers, welcher benachbart zu den Befestigungsaufnahmen angeordnet ist, in diese Ausnehmung einsteckbar bzw. schiebbar ist. Dies ermöglicht eine besonders einfache und intuitive Verbindung der Befestigungsmittel und Befestigungsaufnahmen, wobei die Verbindung über lange Zeit stabil und sicher bleibt.

Gemäß einer weiteren vorteilhaften Ausführungsform kann vorgesehen sein, dass der Stabilisierungskragen zwei, insbesondere spiegelsymmetrische ausgebildete, Bogenabschnitte aufweist. Besonders vorteilhaft sind die Bogenabschnitte derart ausgebildet, dass sie die verbundenen Befestigungsmittel und Befestigungsaufnahmen übergreifen und dabei bevorzugt wenigstens abschnittsweise formschlüssig an den Verbindungen anliegen. Die Verbindung zwischen Befestigungsmitteln und Befestigungsaufnahmen werden somit besonders stabil und sicher geschützt.

Gemäß einer weiteren vorteilhaften Ausführungsform kann vorgesehen sein, dass der Umfang des mehrteiligen Rohrkanals zu 60 bis 90%, bevorzugt 60 bis 80%, ganz besonders bevorzugt 60 bis 70%, durch den Rohrkörper ausgebildet wird. Diese Maßnahmen haben sich als besonders vorteilhaft herausgestellt, um das Rohrsystem stabil auszubilden.

Gemäß einer weiteren vorteilhaften Ausführungsform kann vorgesehen sein, dass der Stabilisierungskragen 50 bis 90%, bevorzugt 60 bis 80%, des Umfangs des mehrteiligen Rohrkanals umschließt. Die Verbindung kann so besonders gut stabilisiert werden, wobei das Anordnen des Stabilisierungskragens am mehrteiligen Rohrkanal im Rohrsystem dennoch einfach möglich bleibt.

Gemäß einer weiteren vorteilhaften Ausführungsform kann vorgesehen sein, dass am Rohrkörper verlaufende Stege ausgebildet sind, welche insbesondere eine Standebene aufspannen. Besonders vorteilhaft verlaufen die Stege entlang der axialen Richtung des mehrteiligen Rohrkanals und sind dabei senkrecht zum axialen Mittelpunkt des mehrteiligen Rohrkanals, erhaben auf dem Umfang aufsitzend ausgebildet. Weiter vorteilhaft verlaufen genau zwei Stege am Rohrkörper, wobei der Rohrkörper bevorzugt zwischen den Stegen eine Abflachung aufweist, wodurch durch die Stege und den Rohrkörper eine Standebene aufgespannt wird, an welcher der Rohrkörper zum Beispiel an einem Untergrund angeordnet, insbesondere aufgeschraubt, werden kann. Alternativ zu axial verlaufenden Stegen ist ebenso denkbar, dass eine Vielzahl von Stegen tangential am Umfang des Rohrkörpers, insbesondere parallel zueinander angeordnet, verläuft.

Gemäß einer weiteren vorteilhaften Ausführungsform kann vorgesehen sein, dass an der in Bezug auf den axialen Mittelpunkt innenliegenden Seite des Rohrkörpers eine entlang der Längsrichtung verlaufende, insbesondere rinnenförmige, Einkerbung ausgebildet ist. Hierdurch wird besonders vorteilhaft ermöglicht eine bessere Biege-Elastizität zu erreichen, welche das Befestigen des Rohrdeckels mit Vorspannung erleichtert. Des Weiteren wird durch die Einkerbung ein Schraubkanal und/oder eine Bohrlinie bereitgestellt. Die Einkerbung kann hierbei vorteilhaft unterschiedlich stark und/oder tief ausgeprägt sein und/oder unterschiedliche Formen aufweisen, zum Beispiel V-förmig oder U-förmig und/oder gestuft, um eine entsprechend ausgeprägte Biege-Elastizität zu erreichen. Die Einkerbung kann des Weiteren als Materialdünnstelle und/oder Ausnehmung in der Wand des Rohrkörpers ausgebildet sein, wobei insbesondere der Umfang des Rohrkörpers durch die Einkerbung nicht vergrößert wird, oder als Ausformung des Rohrkörpers, welche in Bezug auf den axialen Mittelpunkt des Rohrkörpers den Umfang des Rohrkörpers im Bereich der Einkerbung erweitert.

Gemäß einer weiteren vorteilhaften Ausführungsform kann vorgesehen sein, dass der wenigstens eine flexible Biegeabschnitt, insbesondere entlang seines Durchmessers, mit wenigstens zwei Schlitzen durchschlitzt ist, derart, dass gleich oder unterschiedlich dimensionierte, insbesondere vollständig voneinander lösbare Teilstücke des flexiblen Biegeabschnitts entstehen. In anderen Worten ausgedrückt, ist der flexible Biegeabschnitt vorteilhaft mehrteilig ausgebildet, wodurch ein nachträgliches und unkompliziertes Öffnen des flexiblen Biegeabschnitts möglich ist, um zum Beispiel Kabel zu entfernen oder einzubringen. Der Schlitz des flexiblen Biegeabschnitts kann dabei bevorzugt mit einem Stabilisierungskragen überspannt werden, wodurch ein unerwünschtes Öffnen verhindert und der Stoß der Rohrkanäle abgedichtet wird.

Gemäß einer weiteren vorteilhaften Ausführungsform kann ein geschachtelter flexibler Biegeabschnitt vorgesehen sein, welcher aus zwei geschachtelt angeordneten Teilstücken von zwei flexiblen Biegeabschnitten zusammengesetzt ist, wobei ein erstes Teilstück ein zweites Teilstück entlang dessen Umfang wenigstens teilweise umgreifend und/oder umfassend angeordnet ist. Hierdurch kann der geschachtelte flexible Biegeabschnitt besonders stabil und dicht ausgebildet werden.

Gemäß einer weiteren vorteilhaften Ausführungsform kann vorgesehen sein, dass ein Kupplungsabschnitt vorgesehen ist. Der Kupplungsabschnitt kann als zylindrische Rohrmanschette ausgebildet sein, welche insbesondere einen inneren Ring als Abstandshalter und/oder Positionierungshilfe aufweist. Des Weiteren kann der Kupplungsabschnitt als Versatzstück ausgebildet sein, mit zwei zylindrischen Rohraufnahmeabschnitten, welche derart durch einen geneigten und/oder abgeschrägten Versatzabschnitt miteinander verbunden sind, dass die Mittelachsen der Rohraufnahmeabschnitte parallel zueinander versetzt angeordnet sind. Hierdurch kann die Anpassbarkeit des Rohrsystems an verschiedene Einbausituationen noch weiter verbessert werden. Besonders vorteilhaft ist der Kupplungsabschnitt in seinem Umfang derart ausgebildet, dass er zur Verbindung des mehrteiligen Rohrkanals mit dem flexiblen Biegeabschnitt und/oder dem Eckabschnitt und/oder dem T-Stück anordenbar ist und/oder des flexiblen Biegeabschnitts, Eckabschnitts und T-Stücks untereinander. In einem Rohrsystem können unterschiedliche Ausführungsformen des Kupplungsabschnitt angeordnet werden.

Nachfolgend wird die vorliegende Erfindung anhand von lediglich schematischen, beispielhafte Ausführungsformen der Erfindung zeigenden Zeichnungen näher erläutert.
- Fig. 1a:: eine frontale Ansicht eines Rohrkörpers und Rohrdeckels gemäß einer ersten Ausführungsform,
- Fig. 1b:: eine frontale Ansicht eines Rohrkörpers gemäß einer zweiten Ausführungsform,
- Fig. 1c:: eine perspektivische Ansicht eines Rohrkörpers und Rohrdeckels gemäß einer ersten Ausführungsform,
- Fig. 2a:: eine frontale Ansicht eines Stabilisierungskragens gemäß einer ersten Ausführungsform,
- Fig. 2b:: eine frontale Ansicht eines mehrteiligen Rohrkanals mit einem Stabilisierungskragen gemäß einer ersten Ausführungsform,
- Fig. 2c:: eine perspektivische Ansicht eines mehrteiligen Rohrkanals mit einem Stabilisierungskragen gemäß einer ersten Ausführungsform,
- Fig. 3a:: eine Aufsicht und teilweise Schnittansicht eines mehrteiligen Rohrkanals verbunden mit einem Biegeabschnitt gemäß einer ersten Ausführungsform,
- Fig. 3b:: eine Seitenansicht eines flexiblen Biegeabschnitts gemäß einer ersten Ausführungsform
- Fig. 3c:: eine perspektivische Ansicht eines Rohrsystems mit zwei Rohrkanälen gemäß einer ersten Ausführungsform
- Fig. 4:: eine Seitenansicht und teilweise Schnittansicht eines mehrteiligen Rohrkanals verbunden mit einem Eckabschnitt gemäß einer ersten Ausführungsform.
- Fig. 5: eine perspektivische Ansicht eines Eckabschnitts mit 45° Bogen
- Fig. 6a: eine perspektivische Ansicht eines Kupplungsabschnitts welcher als Versatzstück ausgebildet ist
- Fig. 6b: eine perspektivische Ansicht eines Kupplungsabschnitts welcher einen Eckabschnitt mit einem Glattrohrabschnitt verbindet
- Fig. 7a: eine perspektivische Ansicht eines Eckabschnitts mit 90° Bogen
- Fig. 7b: eine perspektivische Ansicht eines Eckabschnitts mit 90° Bogen verbunden mit zwei mehrteiligen Rohrkanälen
- Fig. 8a: eine perspektivische Ansicht eines T-Stücks
- Fig. 8b: eine perspektivische Ansicht eines T-Stücks verbunden mit drei mehrteiligen Rohrkanälen
- Fig. 9a: eine Seitenansicht eines flexiblen Biegeabschnitts gemäß einer zweiten Ausführungsform
- Fig. 9b: eine Frontalansicht eines flexiblen Biegeabschnitts gemäß einer zweiten Ausführungsform
- Fig. 10a: eine Seitenansicht eines geschachtelten flexiblen Biegeabschnitts
- Fig. 10b: eine Frontalansicht eines geschachtelten flexiblen Biegeabschnitts
- Fig. 11a: eine frontale Ansicht eines Rohrkörpers und Rohrdeckels gemäß einer dritten Ausführungsform, bei der Montage
- Fig. 11b: eine frontale Ansicht eines Rohrkörpers und Rohrdeckels gemäß der dritten Ausführungsform, im montierten Zustand
- Fig. 11c: eine vergrößerte Detailansicht der Verbindungsstelle eines Rohrkörpers und Rohrdeckels gemäß der dritten Ausführungsform

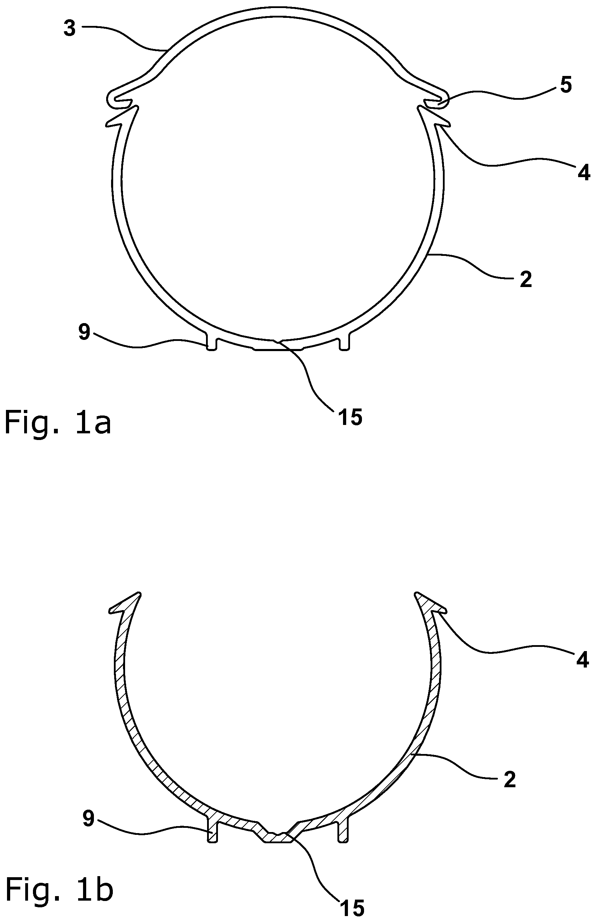

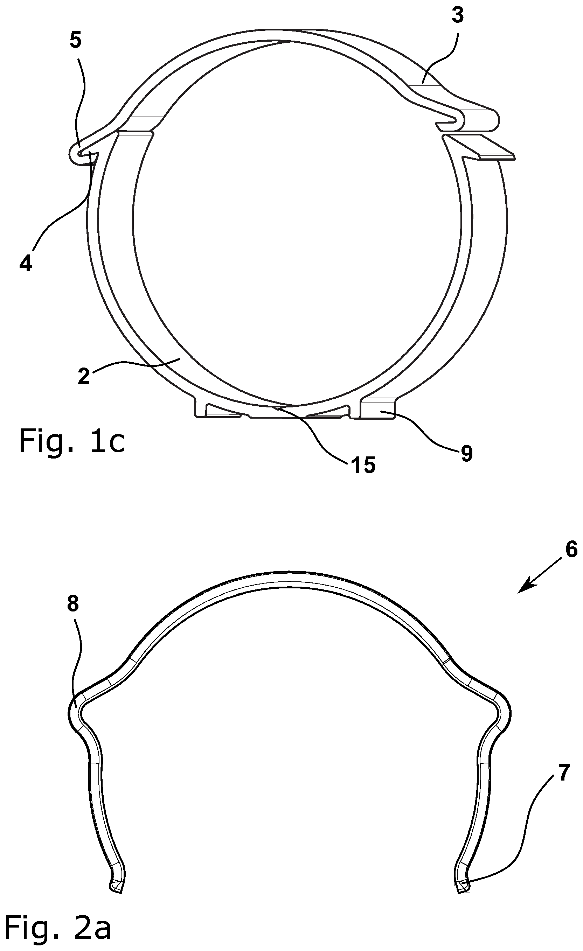

In den Fig. 1a, b und c sieht man einen Rohrkörper 2 und einen Rohrdeckel 3. Der Rohrkörper 2 weist, bevorzugt als Haken ausgebildete Befestigungsaufnahmen 4 auf und der Rohrdeckel 3, bevorzugt als Haken ausgebildete, Befestigungsmittel 5. Die Befestigungsaufnahme 4 und Befestigungsmittel 5 werden, bevorzugt durch ein senkrechtes Aufdrücken des Rohrdeckels 3 auf den Rohrkörper 2, miteinander verbunden, insbesondere durch Einschnappen und/oder Einklicken, um die Verbindung zwischen Rohrkörper 2 und Rohrdeckel 3 herzustellen. Vorteilhaft werden der Rohrkörper 2 und der Rohrdeckel 3 durch die Verbindung gegeneinander verspannt, was insbesondere dadurch erreicht wird, dass der Rohkörper 2 im Bereich der Befestigungsaufnahmen 4 im weitesten Sinne geweitet und/oder vom Rohrinneren wegführend verformt ist. Durch das Verbinden der Befestigungsaufnahme 4 und des Befestigungsmittel 5, wird der Rohrkörper 2 nach innen gedrückt und/oder verformt, wobei durch den hierdurch entstehenden Ausbreitungsdruck die Verbindung der Befestigungsaufnahme 4 und des Befestigungsmittels 5 kraftbeaufschlagt wird. Der Rohrkörper 2 weist hierbei Stege 9 auf, welche entlang der axialen Richtung des mehrteiligen Rohrkanals 1 verlaufen und vorteilhaft eine Standebene, zum Beispiel für die Anordnung an einem Untergrund, aufspannen. Bevorzugt kann der Rohrkörper 2 zwischen den Stegen 9 eine Abflachung aufweisen.

Am Rohrkörper 2 ist des Weiteren an der dem axialen Mittelpunkt zugewandten Innenseite eine Einkerbung 15 ausgebildet, welche die Biege-Elastizität des Rohrkörpers erhöht und/oder einen Schraubkanal und/oder eine Bohrlinie ausbildet. Die Einkerbung 15 kann hierbei zum Beispiel gemäß Fig. 1a und c als Materialdünnstelle und/oder Ausnehmung ausgebildet sein, welche den äußeren Umfang des Rohrkörpers 2 nicht verändert oder gemäß Fig. 1b als Ausformung des Rohrkörpers 2. Andere Formen der Einkerbung 15 sind ebenso möglich.

Die zweite Ausführungsform des Rohrkörpers 2 gemäß Fig. 1b kann mit den weiteren Komponenten auf die gleiche Weise wie die erste Ausführungsform des Rohrkörpers 2 zusammenwirken.

Die Fig. 2a zeigt einen Stabilisierungskragen 6, welcher Bogenabschnitte 8 umfasst, und Eingriffsabschnitte 7, welche als vom axialen Mittelpunkt wegführende Umschlagsabschnitte ausgebildet sind. Der Stabilisierungskragen 6 ist hierbei vorteilhaft als unterbrochener Ring ausgeführt und wird vorteilhaft aus einem wenigstens teilweise flexiblen Material ausgebildet.

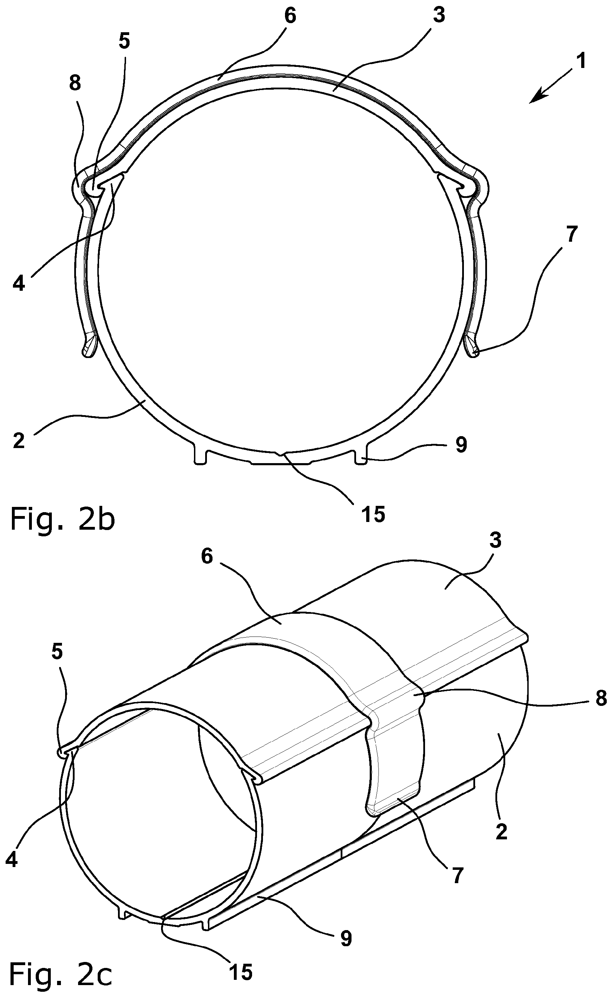

In der Fig. 2b und 2c ist ein mehrteiliger Rohrkanal zu sehen, umfassend ein Rohrkörper 2 mit als Hakenabschnitt ausgebildeten Befestigungsaufnahmen 4. Mit dem Rohrkörper 2 verbunden ist ein Rohrdeckel 3, welcher komplementär zu den Befestigungsaufnahmen 4 ausgebildete Befestigungsmittel 5 aufweist, welche ebenso als Hakenabschnitte ausgebildet sind und über welche der Rohrkörper 2 und Rohrdeckel 3 miteinander verbunden sind. Bevorzugt wird die Verbindung der Befestigungsaufnahmen 4 und Befestigungsmittel 5 durch ein senkrechtes Aufdrücken des Rohrdeckels 3 auf den Rohrkörper 2 erreicht, wobei ebenso denkbar ist, dass der Rohrdeckel 3 auf den Rohrkörper 2 aufgeschoben wird oder andersherum, wobei die Befestigungsmittel 5 entlang der Axialrichtung fortlaufend an den Befestigungsaufnahmen 4 angeordnet werden. Insbesondere sind der Rohrkörper 2 und der Rohrdeckel 3 gegeneinander verspannt, was bevorzugt dadurch erreicht wird, dass der Rohkörper 2 im Bereich der Befestigungsaufnahmen 4 im weitesten Sinne geweitet und/oder vom Rohrinneren wegführend verformt ist. Durch das Verbinden der Befestigungsaufnahme 4 und des Befestigungsmittels 5, wird der Rohrkörper 2 nach innen gedrückt und/oder verformt, wobei durch den hierdurch entstehenden Ausbreitungsdruck die Verbindung der Befestigungsaufnahme 4 und des Befestigungsmittels 5 kraftbeaufschlagt wird.

Am Rohrkörper 2 ist des Weiteren an der dem axialen Mittelpunkt zugewandten Innenseite eine Einkerbung 15 ausgebildet, welche die Biege-Elastizität des Rohrkörpers erhöht und/oder einen Schraubkanal und/oder eine Bohrlinie ausbildet. Die Einkerbung 15 kann hierbei zum Beispiel durch eine Materialdünnstelle und/oder Ausnehmung ausgebildet sein, welche den äußeren Umfang des Rohrkörpers 2 nicht verändert oder als Ausformung des Rohrkörpers 2. Andere Formen der Einkerbung 15 sind ebenso möglich.

Die Verbindung zwischen den Befestigungsaufnahmen 4 und Befestigungsmitteln 5 werden von einem Stabilisierungskragen 6 übergriffen, welcher Bogenabschnitte 8 aufweist, die derart ausgebildet sind, dass sie zumindest abschnittsweise an der Verbindung der Befestigungsaufnahme 4 mit den Befestigungsmitteln 5 und/oder ausschließlich an den Befestigungsmitteln 5 anliegend angeordnet sind. Der Stabilisierungskragen 6 wird bevorzugt senkrecht zur axialen Richtung über den Rohrdeckel 3 und Rohrkörper 2 angeordnet und/oder geschoben, wobei der Stabilisierungskragen 6 bevorzugt materialtechnisch derart ausgeführt ist, dass er eine temporäre, flexible Verformung, insbesondere zur Überwindung der breitesten Stelle des Rohrkörpers 2 und Rohrdeckels 3, ausführen kann, wobei er sich bei Erreichen seiner endgültigen Anordnung wieder in seinem Ausgangszustand befindet. Des Weiteren weist der Stabilisierungskragen 6 Eingriffsabschnitte 7 auf, welche als vom axialen Mittelpunkt des Stabilisierungskragens 6 wegführende Umschlagsabschnitte ausgebildet sind und vorteilhaft ein händisches Eingreifen zum werkzeuglosen Lösen ermöglichen.

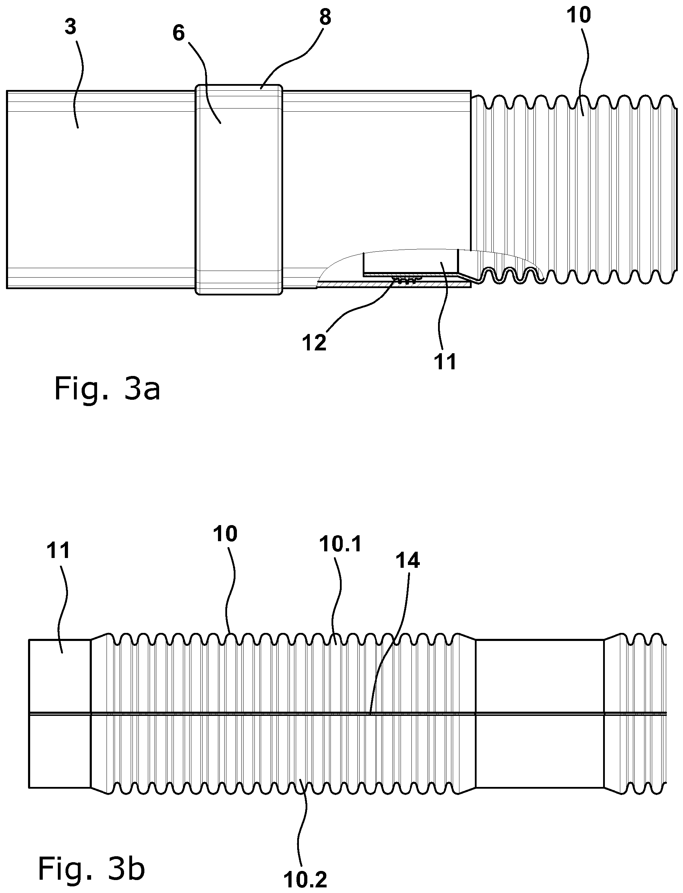

Die Fig. 3a zeigt eine Aufsicht auf einen mehrteiligen Rohrkanal 1 mit einem Rohrdeckel 3, welcher umfasst ist von einem Stabilisierungskragen 6 und in welchen ein Biegeabschnitt 10 mit einem Glattrohrabschnitt 11 eingesteckt ist. Der Glattrohrabschnitt 11 ist hierbei monolithisch am Biegeabschnitt ausgebildet, wobei vorteilhaft an jedem axialen Ende des Biegeabschnitts 10 ein Glattrohrabschnitt 11 ausgebildet ist. Über Kontaktmittel 12, welche insbesondere als Haftring ausgebildet sind, ganz besonders bevorzugt als elastisch verformbarer Lippendichtungsring, vorteilhaft aus einem Gummi und/oder gummiartigen Material, welche am Außenumfang des Glattrohrabschnitts 11 angeordnet sind, wird die Verbindung des mehrteiligen Rohrkanals 1 mit dem Biegeabschnitt 10 derart gesichert, dass sie nur durch einen bewussten Kraftaufwand lösbar ist.

Die Fig. 3b zeigt eine Seitenansicht eines flexiblen Biegeabschnitts 10, welcher entlang seines Durchmessers mit einem Schlitz 14 in zwei Hälften getrennt ist. Alternativ ist ebenso denkbar, dass der Schlitz an einer andren Position angeordnet ist, zum Beispiel um eine Abtrennung von einem Drittel oder einem Viertel des Biegeabschnitts 10 zu erreichen. Eine Ausführungsform ohne Schlitz ist ebenso möglich.

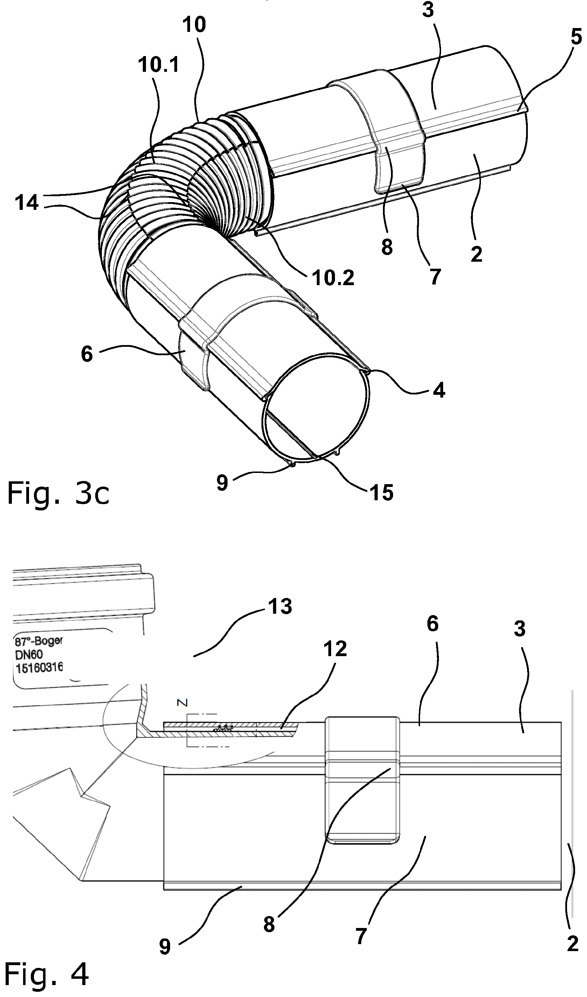

Die Fig. 3c zeigt ein Rohrsystem, wobei zwei mehrteilige Rohrkanäle 1 über einen flexiblen Biegeabschnitt 10 miteinander verbunden sind. Beide Rohrkanäle 1 weisen hierbei einen Rohrkörper 2 und Rohrdeckel 3 auf, welche über Befestigungsmittel 5 und Befestigungsaufnahmen 4 aneinander befestigt sind. Die Rohrkörper 2 und Rohrdeckel 3 werden jeweils von einem Stabilisierungskragen 6 übergriffen, um die Verbindung zu stabilisieren.

Die Fig. 4 zeigt einen mehrteiligen Rohrkanal 1 mit einem Rohrdeckel 3 und einem Rohrkörper 2, welche miteinander verbunden sind und von einem Stabilisierungskragen 6 umgriffen sind. Der Stabilisierungskragen 6 weist hierbei Bogenabschnitte 8 auf, welche die Verbindung zwischen Befestigungsaufnahmen 4 am Rohrkörper 2 und Befestigungsmitteln 5 am Rohrdeckel 3 übergreifen und sichern. Des Weiteren weist der Stabilisierungskragen 6 Eingriffsabschnitte 7 auf, welche ein werkzeugloses Lösen des Stabilisierungskragens 6 erlauben. Am Rohrkörper 2 sind Stege 9 ausgebildet, welche entlang der Axialrichtung des Rohrkörpers 2 verlaufen, und erhaben auf dem Umfangskörper aufsitzen. Die Stege 9 sind hierbei bevorzugt als Paar ausgebildet und spannen eine Standfläche auf, an welcher der Rohrkörper 2 vorteilhaft an einem Untergrund angeordnet werden kann. Mit dem mehrteiligen Rohrkanal 1 verbunden ist ein Eckabschnitt 13, welcher insbesondere einen Bogen von 87° ausbildet, und welcher Kontaktmittel 12 umfasst. Die Kontaktmittel 12 sind hierbei insbesondere als umfangsseitiger Haftring ausgebildet, vorteilhaft aus einem Gummi und/oder gummiartigen Material, ganz besonders bevorzugt als elastisch verformbarer Lippendichtungsring, und bewirken eine sichere und dichte Verbindung, durch ein Einstecken des Eckabschnitts 13 in den mehrteilige Rohrkanal 1. Die Verbindung kann hierbei vorteilhaft durch einen bewussten Kraftaufwand entgegen der Einsteckrichtung gelöst werden.

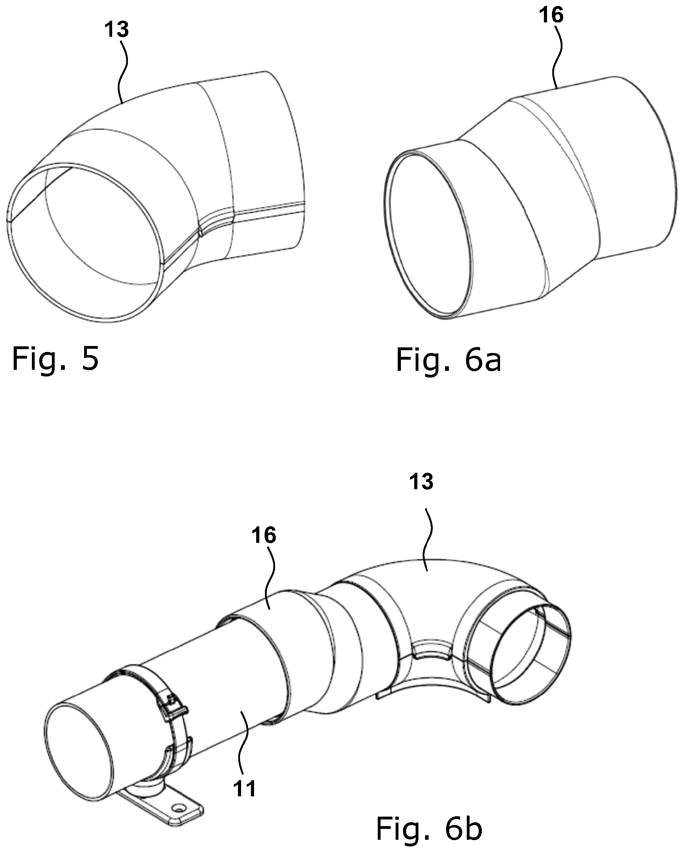

Die Fig. 5 zeigt einen Eckabschnitt 13 mit einem 45° Bogen, wobei die 45° sich auf den Winkel beziehen, in welchem die Austrittsachse auf der Eintrittsachse steht. Der Eckabschnitt 13 ist in dieser Ausführungsform mehrteilig ausgebildet, wobei vorteilhaft die Teilstücke über ein Scharnier beweglich miteinander verbunden sind, insbesondere derart, dass das obere Teilstück aufgeklappt werden kann. Des Weiteren ist auf der in Bezug auf die Mittelachse dem Scharnier gegenüberliegenden Seite des Eckabschnitts 13 ein händisch lösbarer Rastmechanismus, ausgebildet, welcher ein ungewolltes Aufklappen oder Trennen der Teilstücke verhindert.

In der Fig. 6a und 6b ist ein Kupplungsabschnitt 16 zu sehen, welcher als Versatzstück ausgebildet ist, mit zwei zylindrischen Rohraufnahmeabschnitten, welche derart durch einen geneigten und/oder abgeschrägten Versatzabschnitt miteinander verbunden sind, dass die Mittelachsen der Rohraufnahmeabschnitte parallel zueinander versetzt angeordnet sind. In der Fig. 6b ist zu sehen wie über den Kupplungsabschnitt 16 ein Glattrohrabschnitt 11 und ein Eckabschnitt 13 miteinander verbunden sind, derart, dass ein Versatz in der Höhenanordnung des Glattrohrabschnitts 11 und des Eckabschnitts 13 erreicht wird.

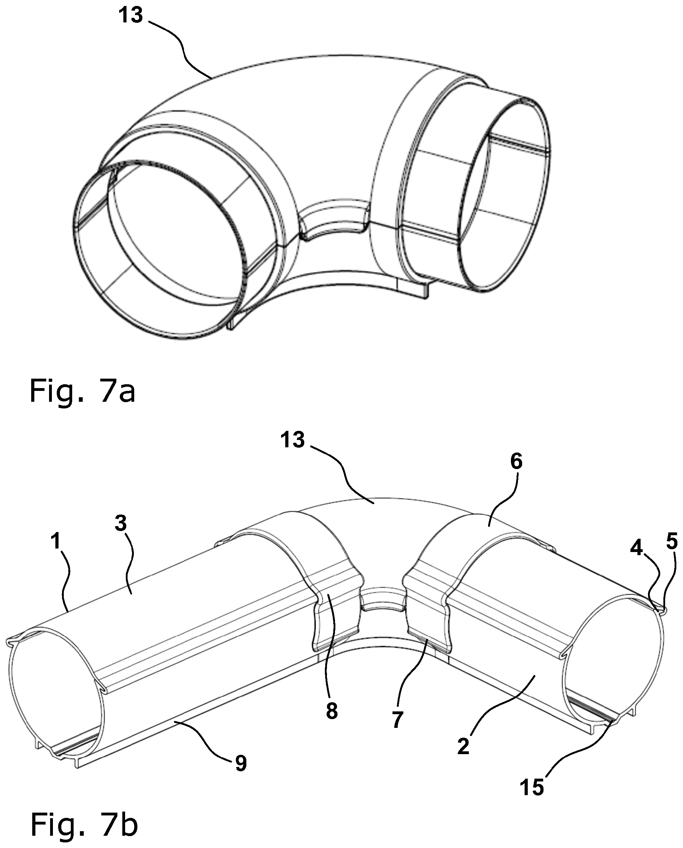

In der Fig. 7a ist ein Eckabschnitt 13 mit einem 90° Bogen zu sehen, wobei die 90° sich auf den Winkel beziehen, in welchem die Austrittsachse auf der Eintrittsachse steht. Der Eckabschnitt 13 ist in dieser Ausführungsform mehrteilig ausgebildet, wobei vorteilhaft die Teilstücke über ein Scharnier beweglich miteinander verbunden sind, insbesondere derart, dass das obere Teilstück aufgeklappt werden kann. Des Weiteren ist auf der in Bezug auf die Mittelachse dem Scharnier gegenüberliegenden Seite ein händisch lösbarer Rastmechanismus, ausgebildet, welcher ein ungewolltes Aufklappen oder Trennen der Teilstücke verhindert. In der Fig. 7b sind über den Eckabschnitt 13 zwei mehrteilige Rohrkanäle 1 miteinander verbunden, wobei die mehrteiligen Rohrkanäle 1 auf den Eckabschnitt 13 aufgesteckt sind. Die Verbindungsstellen zwischen den mehrteiligen Rohrkanälen 1 und dem Eckabschnitt 13 werden jeweils von einem Stabilisierungskragen 6 überspannt und somit gesichert und abgedichtet.

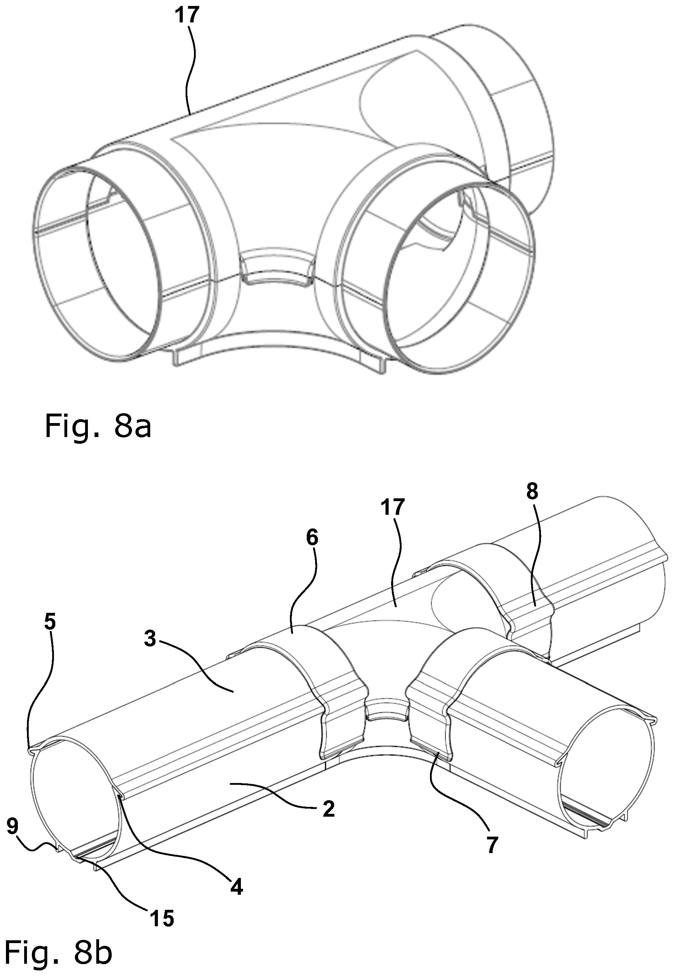

Die Fig. 8a zeigt ein T-Stück 17, welches in dieser Ausführungsform mehrteilig ausgebildet ist, wobei vorteilhaft die Teilstücke über ein Scharnier beweglich miteinander verbunden sind, insbesondere derart, dass das obere Teilstück aufgeklappt werden kann. Des Weiteren ist an dem T-Stück 17 ein händisch lösbarer Rastmechanismus, ausgebildet, welcher ein ungewolltes Aufklappen oder Trennen der Teilstücke verhindert. In der Fig. 8b sind drei mehrteilige Rohrkanäle 1 mit dem T-Stück 17 und über das T-Stück 17 miteinander verbunden. Die mehrteiligen Rohrkanäle 1 sind hierbei auf das T-Stück 17 aufgesteckt, wobei die Verbindungsstellen zwischen dem T-Stück 17 und den mehrteiligen Rohrkanälen 1 jeweils mit einem Stabilisierungskragen 6 überspannt und somit gesichert und abgedichtet sind.

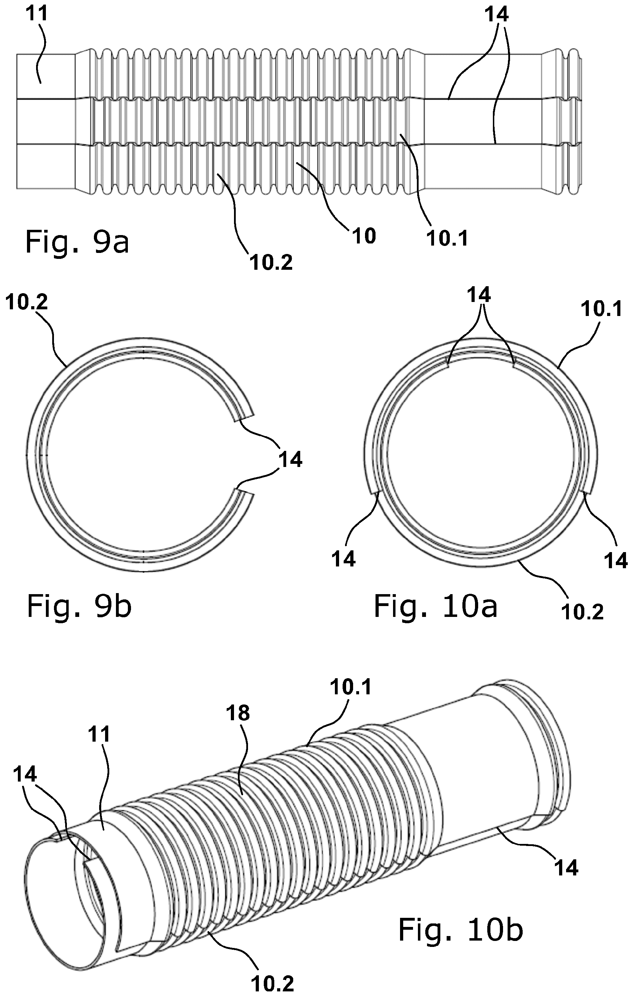

In der Fig. 9a und b ist eine zweite Ausführungsform eines flexiblen Biegeabschnitts 10 zu sehen. Ein erstes Teilstück 10.1 ist durch die zwei Schlitze 14 von einem zweiten Teilstück 10.2 getrennt, wobei das erste Teilstück 10.1 in seiner Erstreckung in Umfangsrichtung derart kleiner als das zweite Teilstück 10.2 dimensioniert ist, dass die beiden Teilstücke aneinander angeordnet einen vollständigen Kreisumfang ausbilden.

In der Fig.10a und b ist ein geschachtelter flexibler Biegeabschnitt 18 zu sehen. Hierbei ist ein erstes Teilstück 10.1 von einem ersten flexiblen Biegeabschnitt 11, welches in seiner Erstreckung in Umfangsrichtung kleiner ist als das zweite Teilstück 10.2 eines zweiten flexiblen Biegeabschnitts, derart geschachtelt an dem zweiten Teilstück 10.2 angeordnet, dass das zweite Teilstück 10.2 abschnittsweise von dem ersten Teilstück 10.1 umfasst wird.

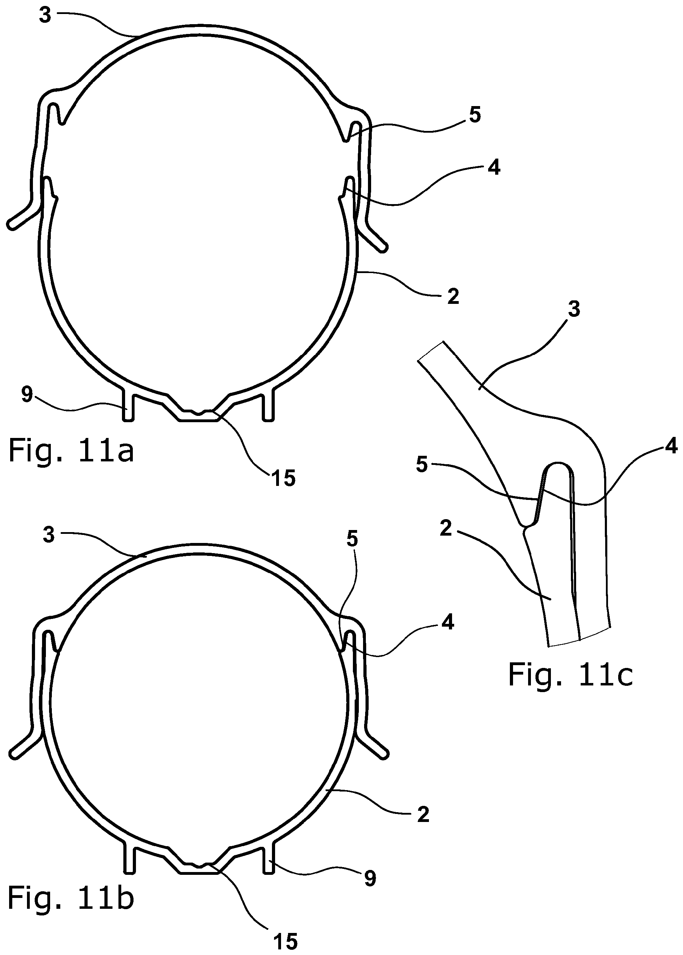

In den Fig. 11a, b und c sieht man Ansichten einer dritten Ausführungsform des Rohrkörpers 2 und Rohrdeckels 3. Der Rohrkörper 2 weist zur Ausbildung einer Steckverbindung ausgebildete Befestigungsaufnahmen 4 auf und der Rohrdeckel 3 komplementär ausgebildete Befestigungsmittel 5. Die Befestigungsaufnahme 4 und Befestigungsmittel 5 werden, bevorzugt durch ein senkrechtes Aufdrücken des Rohrdeckels 3 auf den Rohrkörper 2, miteinander verbunden, um die Verbindung zwischen Rohrkörper 2 und Rohrdeckel 3 herzustellen. Vorteilhaft werden der Rohrkörper 2 und der Rohrdeckel 3 durch die Verbindung gegeneinander verspannt, was insbesondere dadurch erreicht wird, dass der Rohkörper 2 im Bereich der Befestigungsaufnahmen 4 im vom Rohrinneren wegführend verformt ist und/oder der Rohrdeckel 3 zum Rohrinneren hinführend verformt ist. Durch das Verbinden der Befestigungsaufnahme 4 und des Befestigungsmittel 5, wird der Rohrkörper 2 elastisch nach innen gedrückt und/oder der Rohrdeckel 3 elastisch nach außen gedrückt, wobei durch die hierdurch entstehenden Rückstellkraft die Verbindung der Befestigungsaufnahme 4 und des Befestigungsmittels 5 kraftbeaufschlagt wird. Der Rohrkörper 2 weist hierbei Stege 9 auf, welche entlang der axialen Richtung des mehrteiligen Rohrkanals 1 verlaufen und vorteilhaft eine Standebene, zum Beispiel für die Anordnung an einem Untergrund, aufspannen. Des Weiteren weist der Rohrkörper 2 zwischen den Stegen 9 eine Abflachung auf.

Am Rohrkörper 2 ist des Weiteren an der dem axialen Mittelpunkt zugewandten Innenseite eine Einkerbung 15 ausgebildet, welche die Biege-Elastizität des Rohrkörpers erhöht und/oder einen Schraubkanal und/oder eine Bohrlinie ausbildet. Die Einkerbung 15 ist hierbei durch eine Ausnehmung mit einer Materialdünnstelle an deren Boden ausgebildet.

Diese Ausführungsform kann mit den weiteren Komponenten auf die gleiche Weise wie die erste und zweite Ausführungsform zusammenwirken, wobei der Stabilisierungskragen 6 in diesem Fall in seiner Form entsprechend der äußeren Form des Rohrdeckels 3 und Rohrkörpers 2 angepasst ist.

### Bezugszeichenliste

- 1: Mehrteiliger Rohrkanal
- 2: Rohrkörper
- 3: Rohrdeckel
- 4: Befestigungsaufnahme
- 5: Befestigungsmittel
- 6: Stabilisierungskragen
- 7: Eingriffsabschnitt
- 8: Bogenabschnitt
- 9: Steg
- 10: Biegeabschnitt
- 10.1: erstes Teilstück
- 10.2: zweites Teilstück
- 11: Glattrohrabschnitt
- 12: Kontaktmittel
- 13: Eckabschnitt
- 14: Schlitz
- 15: Einkerbung
- 16: Kupplungsabschnitt
- 17: T-Stück
- 18: geschachtelter flexibler Biegeabschnitt

## Patentansprüche

1. Mehrteiliger Rohrkanal,
insbesondere zur Aufnahme und/oder Ummantelung von Kabeln oder Leitungen,
welcher zumindest annährend als hohler Zylinder ausgebildet ist, wobei ein erster Abschnitt des Umfangs des mehrteiligen Rohrkanals (1) durch einen Rohrkörper (2), welcher Befestigungsaufnahmen (4) aufweist, ausgebildet wird,
und wobei ein zweiter Abschnitt des Umfangs des mehrteiligen Rohrkanals (1) durch einen Rohrdeckel (3), welcher komplementär zu den Befestigungsaufnahmen (4) ausgebildete Befestigungsmittel (5) aufweist, ausgebildet wird,
wobei der Rohrkörper (2) und Rohrdeckel (3) voneinander lösbar ausgebildet sind und wobei die Befestigungsmittel (5) und die Befestigungsaufnahmen (4), zur Verbindung des Rohrkörpers (2) und Rohrdeckels (3), aneinander, insbesondere reversibel, bevorzugt werkzeuglos, anordenbar sind,
**dadurch gekennzeichnet,**
**dass** ein, bevorzugt in axialer Richtung beweglich gelagerter, Stabilisierungskragen (6) umfasst ist, welcher den Rohrkörper (2) und Rohrdeckel (3) wenigstens abschnittsweise umfangseitig umgreift und/oder übergreift.

2. Mehrteiliger Rohrkanal nach Anspruch 1,
**dadurch gekennzeichnet,**
**dass** der Stabilisierungskragen (6) als umfangseitig unterbrochener Ring ausgebildet ist, welcher bevorzugt an seinen umfangsseitigen Enden Eingriffsabschnitte (7) aufweist.

3. Mehrteiliger Rohrkanal nach Anspruch 1 oder 2,
**dadurch gekennzeichnet,**
**dass** der Rohrkörper (2) und/oder Rohrdeckel (3) vorgespannt sind und/oder miteinander verspannbar sind.

4. Mehrteiliger Rohrkanal nach einem der Ansprüche 1 bis 3,
**dadurch gekennzeichnet,**
**dass** der Stabilisierungskragen (6) zwei, insbesondere spiegelsymmetrisch ausgebildete, Bogenabschnitte (8) aufweist.

5. Mehrteiliger Rohrkanal nach einem der Ansprüche 1 bis 4,
**dadurch gekennzeichnet,**
**dass** der Umfang des mehrteiligen Rohrkanals (1) zu 60% bis 90%, bevorzugt 60% bis 80%, ganz besonders bevorzugt 60 bis 70%, durch den Rohrkörper (2) ausgebildet wird.

6. Mehrteiliger Rohrkanal nach einem der Ansprüche 1 bis 5,
**dadurch gekennzeichnet,**
**dass** der Stabilisierungskragen (6) 50% bis 90 %, bevorzugt 60% bis 80%, des Umfangs des mehrteiligen Rohrkanals (1) umschließt.

7. Mehrteiliger Rohrkanal nach einem der Ansprüche 1 bis 6,
**dadurch gekennzeichnet,**
**dass** am Rohrkörper (2) verlaufende Stege (9) ausgebildet sind, welche insbesondere eine Standebene aufspannen.

8. Mehrteiliger Rohrkanal nach einem der Ansprüche 1 bis 7,
**dadurch gekennzeichnet,**
**dass** an der in Bezug auf den axialen Mittelpunkt innenliegenden Seite des Rohrkörpers (2) eine entlang der Längsrichtung verlaufende, insbesondere rinnenförmige, Einkerbung (15) ausgebildet ist.

9. Rohrsystem,
insbesondere zur Aufnahme und/oder Ummantelung von Kabeln oder Leitungen,
umfassend einen oder eine Vielzahl von mehrteiligen Rohrkanälen (1), bevorzugt nach einem der Ansprüche 1 bis 8, welche zumindest annährend als hohle Zylinder ausgebildet sind, wobei ein erster Abschnitt des Umfangs eines mehrteiligen Rohrkanals (1) durch einen Rohrkörper (2), welcher Befestigungsaufnahmen (4) aufweist, ausgebildet wird, und wobei ein zweiter Abschnitt des Umfangs eines mehrteiligen Rohrkanals (1) durch einen Rohrdeckel (3), welcher komplementär zu den Befestigungsaufnahmen (4) ausgebildete Befestigungsmittel (5) aufweist, ausgebildet wird, wobei die Rohrkörper (2) und Rohrdeckel (3) voneinander lösbar ausgebildet sind und wobei die Befestigungsmittel (5) und die Befestigungsaufnahmen (4), zur Verbindung der Rohrkörper (2) und Rohrdeckel (3), aneinander, insbesondere reversibel, bevorzugt werkzeuglos, anordenbar sind, **dadurch gekennzeichnet,**
**dass** ein oder eine Vielzahl von, bevorzugt in axialer Richtung beweglich gelagerter, Stabilisierungskragen (6) umfasst ist, welche die Rohrkörper (2) und Rohrdeckel (3) wenigstens abschnittsweise umfangseitig umgreifen und/oder übergreifen.

10. Rohrsystem nach Anspruch 9,
**dadurch gekennzeichnet,**
**dass** wenigstens ein zweiter mehrteiliger Rohrkanal (1) umfasst ist, wobei der Stabilisierungskragen (6) die Verbindungsstelle des ersten und zweiten mehrteiligen Rohrkanals (1) umgreifend und/oder umfassend angeordnet ist.

11. Rohrsystem nach Anspruch 9 oder 10,
**dadurch gekennzeichnet,**
**dass** wenigstens ein, bevorzugt eine Vielzahl von, flexiblen Biegeabschnitten (10) umfasst ist, welche insbesondere als Wellenrohr ausgebildet sind, wobei die Biegeabschnitte (10), insbesondere an einem Glattrohrabschnitt (11), bevorzugt über Kontaktmittel (12), mit dem mehrteiligen Rohrkanal (1) verbindbar sind, wobei besonders bevorzugt der Stabilisierungskragen (6) die Verbindungsstelle des mehrteiligen Rohrkanals (1) und des flexiblen Biegeabschnitts umgreifend und/oder umfassend angeordnet ist.

12. Rohrsystem nach einem der Ansprüche 9 bis 11,
**dadurch gekennzeichnet,**
**dass** ein, insbesondere steifer, Eckabschnitt (13) umfasst ist, welcher, bevorzugt über Kontaktmittel (12), mit dem mehrteiligen Rohrkanal (1) und/oder Biegeabschnitt (10) verbindbar ist, und einen Bogen von 10 bis 170°, bevorzugt 40 bis 90°, ganz besonders bevorzugt 45° oder 87° oder 90°, ausbildet, wobei besonders bevorzugt der Stabilisierungskragen (6) die Verbindungsstelle des mehrteiligen Rohrkanals (1) und des Eckabschnitts umgreifend und/oder umfassend angeordnet ist.

13. Rohrsystem nach Anspruch 9 bis 12,
**dadurch gekennzeichnet,**
**dass** ein T-Stück umfasst ist, welches mit dem mehrteiligen Rohrkanal und/oder Biegeabschnitt verbindbar ist, wobei besonders bevorzugt der Stabilisierungskragen (6) die Verbindungsstelle des mehrteiligen Rohrkanals (1) und des T-Stücks umgreifend und/oder umfassend angeordnet ist.

14. Rohrsystem nach Anspruche 11,
**dadurch gekennzeichnet,**
**dass** der wenigstens eine flexible Biegeabschnitt, insbesondere entlang seines Durchmessers, mit wenigstens zwei Schlitzen (14) durchschlitzt ist, derart, dass gleich oder unterschiedlich dimensionierte, insbesondere vollständig voneinander lösbare, Teilstücke (10.1, 10.2) des flexiblen Biegeabschnitts entstehen.

15. Rohrsystem nach Anspruche 14,
**gekennzeichnet durch**,
einen geschachtelten flexiblen Biegeabschnitt (18), welcher aus zwei geschachtelt angeordneten Teilstücken (10.1, 10.2) von zwei flexiblen Biegeabschnitten (11) zusammengesetzt ist, wobei ein erstes Teilstück (10.1) ein zweites Teilstück (10.2) entlang dessen Umfang wenigstens teilweise umgreifend und/oder umfassend angeordnet ist.
